# EUROPEAN PATENT APPLICATION

(11) **EP 4 527 673 A1**
(43) Date of publication of application: **26.03.2025**
(21) Application number: 24200698.9
(22) Date of filing: 17.09.2024
(51) Int. Cl.: B60L 15/32, B60L 7/16, B60L 50/51, B62D 55/06

(54) **CRAWLER VEHICLE AND CONTROL METHOD TO CONTROL SAID CRAWLER VEHICLE**

(30) Priority: 19.09.2023 IT 202300019209
(71) Applicant: PRINOTH S.p.A., 39049 Vipiteno (BZ) (IT)
(72) Inventor: KIRCHMAIR, Martin, 39049 VIPITENO (BZ) (IT); PAOLETTI, Alberto, 39049 VIPITENO (BZ) (IT); SALIS, Francesco, 39049 VIPITENO (BZ) (IT); PEGORARO, Roberto, 39049 VIPITENO (BZ) (IT); MAURER, Gregor, 39049 VIPITENO (BZ) (IT); UNTERHOLZNER, Markus, 39049 VIPITENO (BZ) (IT)
(74) Representative: Studio Torta S.p.A.

(57) **Abstract**

A crawler vehicle has a first track (3) and a second track (4); a first drive wheel (5) and a second drive wheel (6) independent of each other and coupled to the first and to the second track (3, 4) respectively; a first electric motor (13) and a second electric motor (14) mechanically coupled to the first and to the second drive wheel (5, 6) respectively; an electric energy storage unit (15) configured to deliver electric power; and an electric power transmission assembly (16), which is configured to transmit electric power from the energy storage unit (15) to the first and to the second electric motor (13, 14) and comprises a first inverter (17) electrically coupled to the first electric motor (13), and a second inverter (18) electrically coupled to the second electric motor (14).

## Description

### CROSS-REFERENCE TO RELATED APPLICATIONS

This patent application claims priority from Italian patent application no. 102023000019209 filed on September 19, 2023, the entire disclosure of which is incorporated herein by reference.

### TECHNICAL FIELD

The present invention relates to a crawler vehicle, in particular for preparing ski runs, and a control method to control said crawler vehicle.

### STATE OF THE ART

In recent decades, the growing focus on reducing global pollution has led to the development of electric or hybrid vehicles, in the field of crawler vehicles for preparing ski runs as well.

Generally, a crawler vehicle of the type identified above comprises a frame; a cabin mounted on the frame; a propulsion system mounted on the frame; drive wheels driven by the propulsion system; and tools powered by the propulsion system.

Typically, the propulsion system of the above crawler vehicle comprises an electric motor, a feed pump, a mechanical transmission configured to transmit power from the electric motor to the feed pump, and hydraulic actuators, which are fed by the feed pump and are configured to drive the drive wheels and the tools.

In the case of a fully electric vehicle, the propulsion system comprises an electric energy storage unit configured to supply power to the electric motor.

In the case of a hybrid vehicle, the propulsion system comprises an internal combustion engine, which supplies power either directly to the mechanical transmission to drive the drive wheels or to an electric generator to generate electric energy to feed the electric motor.

However, currently known electric or hybrid vehicles do not exhibit a fully satisfactory energy efficiency and controlling the power distribution between the two drive wheels is problematic.

### OBJECT OF THE PATENT

One object of the present invention is to provide a crawler vehicle mitigating the drawbacks of the prior art described herein.

In accordance with the present invention, a crawler vehicle is provided, preferably for preparing ski runs, the crawler vehicle comprising:
- a first drive wheel and a second drive wheel;
- a first track and a second track driven by the first and the second drive wheel, respectively;
- a first electric motor and a second electric motor mechanically coupled to the first and to the second drive wheel, respectively;
- an electric energy storage unit configured to deliver electric power; and
- an electric power transmission assembly, which is configured to transmit electric power, preferably exclusively, from the storage unit to the first and to the second electric motor and comprises a first inverter electrically coupled to the first electric motor, and a second inverter electrically coupled to the second electric motor.

The present invention allows the energy efficiency of the crawler vehicle to be increased and the power distribution between the first and the second electric motor to be controlled precisely and easily.

The fact that the first and second electric motors deliver power directly to the drive wheels avoids the need to convert mechanical power into hydraulic power and, as a result, improves the performance of the crawler vehicle in terms of energy efficiency. In practice, the first and second electric motors make it possible to provide a crawler vehicle without a hydraulic power transmission system.

In addition, the direct power supply allows optimum control of the power transmitted to the first and second drive wheels.

A further object of the present invention is to provide a control method for controlling a crawler vehicle, which mitigates the drawbacks of the prior art described herein.

In accordance with the present invention, a control method is provided to control a crawler vehicle as previously described, the control method comprising the steps of:
- issuing control commands to the crawler vehicle; and
- controlling the distribution of the electric power transmitted by the electric power transmission assembly to the first and to the second electric motor so that the sum of the powers transmitted to the first and to the second electric motor is less than the total power that can be delivered by the energy storage unit, and so that the dynamics of the crawler vehicle adhere to the control commands issued to the crawler vehicle.

Since the energy stored in the electric energy storage unit is a limited resource, as is the instantaneous power that can be delivered, the present method optimally distributes the power transmitted by the electric power transmission assembly between the first and second electric motors in all operating conditions of the crawler vehicle.

### BRIEF DESCRIPTION OF THE FIGURES

Further features and advantages of the present invention will be apparent from the following description of a non-limiting embodiment thereof, with reference to the accompanying figures, in which:
- Figure 1 is a side elevation view, with parts removed for clarity, of a crawler vehicle realised in accordance with the present invention;
- Figure 2 is a top view, with parts removed for clarity and schematized parts, of a first embodiment of the crawler vehicle in Figure 1;
- Figure 3 is a top view, with parts removed for clarity and schematized parts, of a second embodiment of the crawler vehicle in Figure 1; and
- Figure 4 is a further top view, with parts removed for clarity and schematized parts, of the second embodiment of the crawler vehicle in Figure 1.

### DETAILED DESCRIPTION

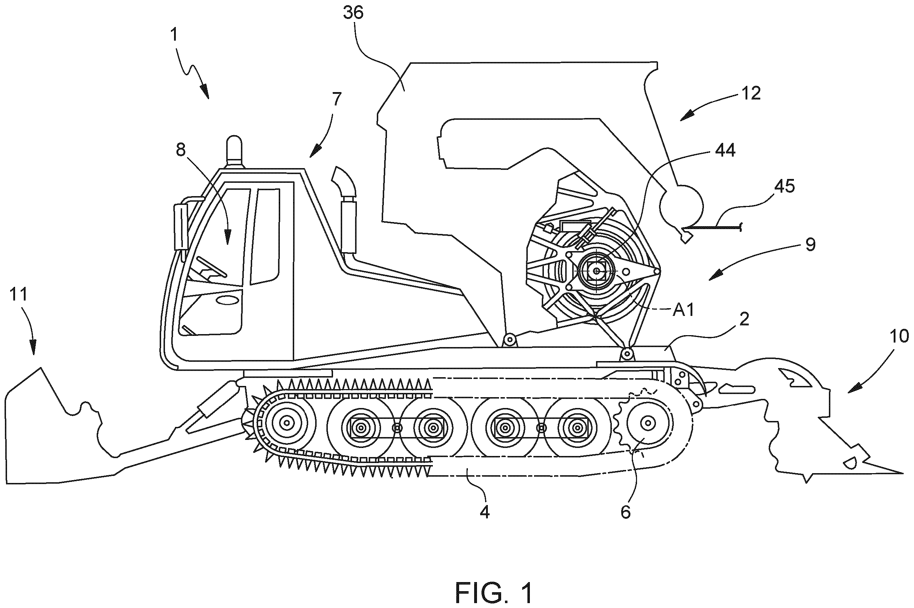

With reference to Figure 1, number 1 indicates, as a whole, a crawler vehicle which, in the case shown herein, is used for preparing ski runs. In particular, the crawler vehicle 1 is a snow groomer vehicle.

In greater detail, the crawler vehicle 1 is used for preparing downhill ski runs, and/or cross-country ski runs, and/or ski jumping ramps, and/or half pipe ski runs, and/or snow parks.

In accordance with a further embodiment, the crawler vehicle 1 may be used for agricultural operations, such as harvesting and/or handling agricultural products and/or forage ensilage and/or harvesting and/or handling bagasse.

In addition, in accordance with a further embodiment not shown in the attached figures, the crawler vehicle 1 comprises a shredder, preferably located in the front of the crawler vehicle 1, and can be used for shredding vegetation.

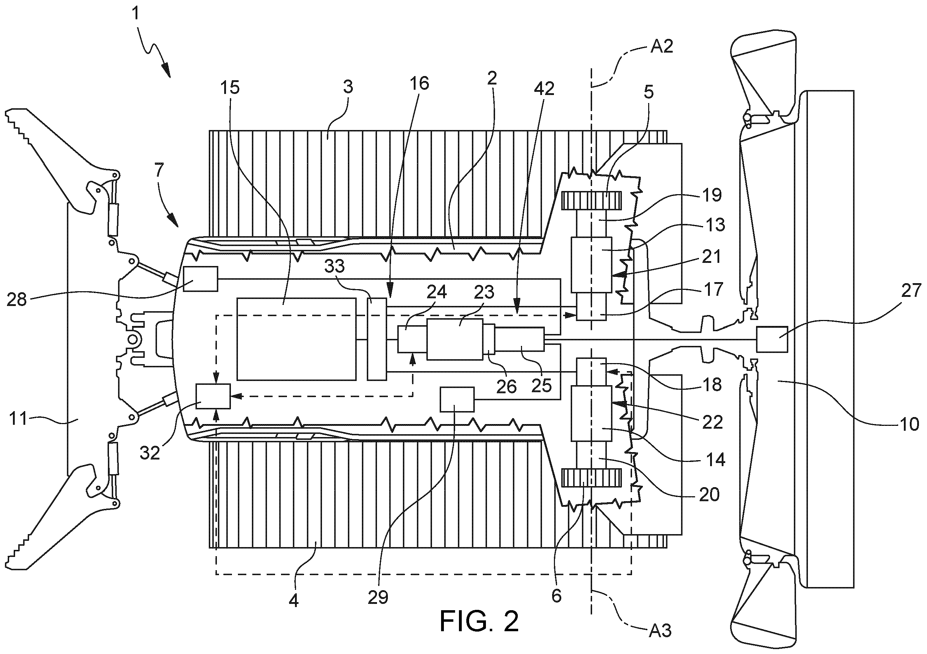

The crawler vehicle 1 comprises a frame 2, a track 3 (Figure 2), a track 4, a drive wheel 5 (Figure 2) and a drive wheel 6 independent of each other and coupled to the track 3 (Figure 2) and the track 4, respectively.

In particular, the crawler vehicle 1 comprises a drive cabin 7 coupled to the frame 2; a user interface 8, which is located in the drive cabin 7 and is configured to allow an operator to control the crawler vehicle 1; and a working tool assembly 9 connected to the frame 2.

In the case described and illustrated herein, the working tool assembly 9 comprises a cutter 10, a shovel 11, and a winch 12.

In particular, the winch 12 comprises a support structure 36 fixed to the frame 2, a drum 44 which can rotate relative to the support structure 36 around a rotation axis A1, and a traction cable 45 having one end fixed to the drum 44 and at least partially wound around the drum 44. In particular, the drum 44 is configured to rotate around the rotation axis A1 in order to wind or unwind the traction cable 45.

With reference to Figure 2, the crawler vehicle 1 comprises an electric motor 13 and an electric motor 14 mechanically coupled to the drive wheel 5 and the drive wheel 6, respectively; an electric energy storage unit 15 configured to deliver electric power; and an electric power transmission assembly 16, which is configured to transmit electric power from the energy storage unit 15 to the electric motors 13 and 14 and comprises an inverter 17 electrically coupled to the electric motor 13, and an inverter 18 electrically coupled to the electric motor 14.

In the non-limiting case of the present invention described and illustrated herein, the electric power transmission assembly 16 is configured to transmit electric power exclusively from the energy storage unit 15 to the electric motors 13 and 14.

In other words, the electric motors 13 and 14 are powered solely with the electric power delivered by the energy storage unit 15. In particular, the crawler vehicle 1 is not equipped with an internal combustion engine.

In addition, the electric power transmission assembly 16 comprises a distribution device 33, which is electrically connected to the energy storage unit 15 and the electric motors 13 and 14. In particular, the distribution device 33 is configured to receive, as input, the electric power delivered by the energy storage unit 15 and to distribute, as output, said electric power between the electric motors 13 and 14.

In accordance with one embodiment, the energy storage unit 15 comprises at least one electric battery.

In particular, the electric motors 13 and 14 are arranged at the respective drive wheels 5 and 6.

In greater detail, the drive wheels 5 and 6 are configured to rotate around a rotation axis A2 and a rotation axis A3, respectively. The electric motors 13 and 14 are aligned with the rotation axis A2 and the rotation axis A3, respectively.

In practice, each electric motor 13, 14 is configured to both supply energy to the respective drive wheel 5, 6, and receive energy from the respective drive wheel 5, 6 and transmit said received energy to the energy storage unit 15 through the electric power transmission assembly 16 in order to recharge the energy storage unit 15.

In addition, the crawler vehicle 1 comprises a mechanical transmission 19 and a mechanical transmission 20 configured to transmit mechanical power from the electric motor 13 to the drive wheel 5 and from the electric motor 14 to the drive wheel 6, respectively.

In practice, the drive wheel 5, the electric motor 13, the inverter 17, and the mechanical transmission 19 define a drive unit 21 configured to drive the track 3. The drive wheel 6, the electric motor 14, the inverter 18, and the mechanical transmission 20 define a drive unit 22 configured to drive the track 4.

In addition, the crawler vehicle 1 comprises an electric motor 23 to drive the working tool assembly 9. In other words, the electric motor 23 is mechanically coupled to the working tool assembly 9.

The electric power transmission assembly 16 is configured to transmit electric power from the energy storage unit 15 to the electric motor 23. In particular, the electric power transmission assembly 16 comprises an inverter 24 configured to transmit electric power from the energy storage unit 15 to the electric motor 23.

In greater detail, in a propulsion phase, each inverter 17, 18, 24 is configured to receive electric power from the energy storage unit 15 as direct current and transmit electric power to the respective electric motor 13, 14, 23 as alternating current. In practice, each inverter 17, 18, 24 is configured to convert the input, direct current electric power into output, alternating current electric power.

In a regeneration phase, each inverter 17, 18, 24 is configured to receive AC electric power from the respective electric motor 13, 14, 23 and transmit DC electric power to the energy storage unit 15.

In accordance with the first embodiment, the crawler vehicle 1 comprises a hydraulic transmission assembly 42 configured to transmit power from the electric motor 23 to the working tool assembly 9.

In the non-limiting case of the present invention described and illustrated herein, the hydraulic transmission assembly 42 comprises a hydraulic pump 25 to transmit power from the electric motor 23 to the working tool assembly 9.

In particular, the crawler vehicle 1 comprises a mechanical transmission 26 configured to transmit mechanical power from the electric motor 23 to the hydraulic pump 25.

In greater detail, the crawler vehicle 1 comprises a hydraulic motor 27 configured to drive the cutter 10, a hydraulic motor 28 configured to drive the shovel 11, and a hydraulic motor 29 configured to drive the winch 12. In particular, the hydraulic motor 29 is configured to control the rotation of the drum 44 around the rotation axis A1 (Figure 1).

In the case described and illustrated herein, the hydraulic pump 25 is hydraulically connected to the hydraulic motors 27, 28, and 29 to transmit power to the hydraulic motors 27, 28, and 29.

In accordance with a variant of the present invention, not shown in the attached figures, the crawler vehicle 1 comprises a dedicated hydraulic pump 25 for each hydraulic motor 27, 28, and 29.

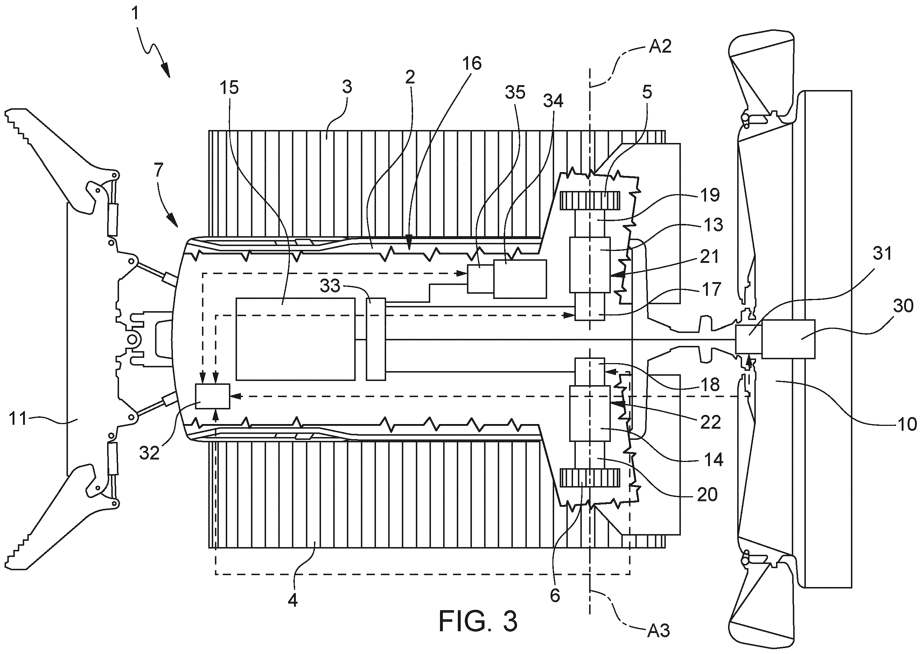

Figure 3 shows the crawler vehicle 1 made in accordance with the second embodiment of the present invention.

In accordance with said embodiment, the crawler vehicle 1 comprises an electric motor 30, which is configured to drive the cutter 10 directly. The electric power transmission assembly 16 comprises an inverter 31 configured to transmit electric power from the energy storage unit 15 to the electric motor 30.

In addition, the crawler vehicle 1 comprises an electric motor 34 to drive the winch 12 directly. The electric power transmission assembly 16 comprises an inverter 35 configured to transmit electric power from the energy storage unit 15 to the electric motor 34.

In accordance with one embodiment, the electric motor 34 is directly connected to the drum 44 of the winch 12 without a mechanical transmission and, in particular, is aligned with the rotation axis A1 (Figure 1).

In accordance with a further embodiment, the crawler vehicle 1 comprises a mechanical transmission, not shown in the attached figures, configured to transmit mechanical power from the electric motor 34 to the drum 44. In other words, said mechanical transmission is interposed between the electric motor 34 and the drum 44. In particular, said mechanical transmission is a planetary gear.

In practice, the crawler vehicle 1 manufactured in accordance with the second embodiment is not equipped with the hydraulic pump 25 and the hydraulic motors 27, 28, and 29.

It is understood that the crawler vehicle 1 may comprise additional hydraulic pumps, not shown in the attached figures, to feed additional tools/services of the crawler vehicle 1.

With reference to Figure 2, the crawler vehicle 1 comprises a control unit 32 configured to receive control commands issued by an operator of the crawler vehicle 1 and to control the distribution of the electric power transmitted by the electric power transmission assembly 16 to the electric motors 13, 14 and 23, so that the sum of the powers transmitted to the electric motors 13, 14 and 23 is less than the total power that can be delivered by the energy storage unit 15 and that the dynamics of the crawler vehicle 1 adhere to the control commands issued by the operator of the crawler vehicle 1.

In practice, the control unit 32 is in communication with the electric power transmission assembly 16 and is configured to establish in real time a power priority between the electric motors 13, 14, and 23.

In particular, the control unit 32 is configured to set a first, a second, and a third input current limit respectively to the electric motors 13, 14 and 23 as a function of the operating regime of the crawler vehicle 1, and to control the electric power transmission assembly 16 so that the current of the electric power transmitted to the electric motors 13, 14 and 23 does not exceed the first, second and third current limits, respectively.

In greater detail, the control unit 32 is configured to control the inverters 17, 18, and 24 so that the current of the electric power transmitted to the electric motors 13, 14 and 23 does not exceed the first, second and third current limits, respectively.

From an operational point of view, the first and second current limits set by the control unit 32 limit the drive torque applied by the electric motors 13 and 14 to the respective drive wheels 5 and 6.

In particular, the inverters 17, 18, and 24 are configured to detect a first torque signal indicative of a first drive torque delivered by the electric motor 13, a second torque signal indicative of a second drive torque delivered by the electric motor 14, and a third torque signal indicative of a third drive torque delivered by the electric motor 23, respectively. In practice, each inverter 17, 18, 24 is configured to detect the current transmitted to the respective electric motor 13, 14, 24 and to establish the respective drive torque delivered as a function of the detected current.

In addition, each inverter 17, 18, 24 is configured to detect a speed signal indicative of the rotational speed of the respective electric motor 13, 14, 23 and/or a power signal indicative of the power delivered by the respective electric motor 13, 14, 23.

The control unit 32 is in communication with the inverters 17, 18 and 24 and is configured to set said current limit as a function of the first, second and third torque signals detected by the inverters 17, 18 and 24, respectively.

In particular, the control unit 32 is configured to receive the first, second and third torque signals detected, to calculate the current required by the electric motors 13, 14 and 23 as a function of the first, second and third torques acquired, respectively, and to set the first, second and third current limits as a function of the currents required by the electric motors 13, 14 and 23.

With reference to Figure 3, the control unit 32 is configured to receive control commands issued by an operator of the crawler vehicle 1 and to control the distribution of the electric power transmitted by the electric power transmission assembly 16 to the electric motors 13, 14, 30 and 34, so that the sum of the powers transmitted to the electric motors 13, 14, 30 and 34 is less than the total power that can be delivered by the energy storage unit 15 and that the dynamics of the crawler vehicle 1 adhere to the control commands issued by the operator of the crawler vehicle 1.

In practice, the control unit 32 is in communication with the electric power transmission assembly 16 and is configured to establish in real time a power priority between the electric motors 13, 14, 30 and 34.

In particular, the control unit 32 is configured to set a first, a second, a third, and a fourth input current limit respectively to the electric motors 13, 14, 30 and 34 as a function of the operating regime of the crawler vehicle 1, and to control the electric power transmission assembly 16 so that the current of the electric power transmitted to the electric motors 13, 14, 30 and 34 does not exceed the first, second, third and fourth current limits, respectively.

In greater detail, the control unit 32 is configured to control the inverters 17, 18, 31 and 35 so that the current of the electric power transmitted to the electric motors 13, 14, 30 and 34 does not exceed the first, second, third and fourth current limits, respectively.

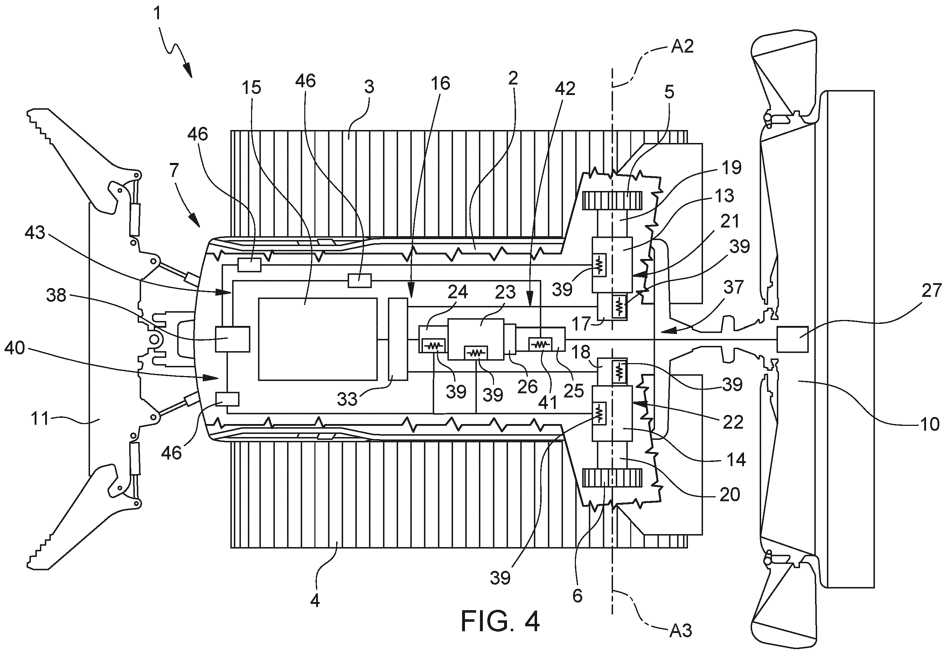

With reference to Figure 4, the crawler vehicle 1 comprises a heat transfer assembly 37, which comprises at least one heating element 38 arranged within the drive cabin 7, at least one heat exchanger 39 configured to exchange heat with the electric motors 13, 14, and 23 and/or with the inverters 17, 18, and 24 so as to heat a heating fluid, and a transport system 40 for conveying the heating fluid from the heat exchanger 39 to the heating element 38.

In the non-limiting case of the present invention described and illustrated herein, the heat transfer assembly 37 comprises a heat exchanger 39 for each electric motor 13, 14, 23. In particular, the heat transfer assembly 37 comprises a heat exchanger 39 for each inverter 12, 18, 24.

Furthermore, the heat transfer assembly 37 comprises at least one heat exchanger 41 configured to exchange heat with the hydraulic transmission assembly 42 so as to heat the heating fluid, and a transport system 43 for conveying the heating fluid from the heat exchanger 41 to the heating element 38. In particular, the heat exchanger 41 is configured to exchange heat with the hydraulic fluid of the hydraulic pump 25.

In accordance with one embodiment not shown in the attached figures, the heat transfer assembly 37 comprises an additional heating element configured to heat the energy storage unit 15.

In greater detail, the transport systems 40 and 43 comprise respective delivery pipes, not shown in the attached figures, which are configured to transport the heating fluid from the heat exchangers 39 and 41, respectively, to the heating element 38, and respective return pipes, not shown in the attached figures, which are configured to transport the heating fluid from the heating element 38 to the heat exchangers 39 and 41, respectively.

In addition, the heat transfer assembly 37 comprises a heater 46 configured to heat the transport system 40 and/or the transport system 43. In particular, the heater 46 comprises an electrical resistor configured to heat the heating fluid contained in the delivery pipes of the transport system 40 and/or transport system 43 in order to increase the temperature thereof.

In practice, the heater 46 is arranged in series in relation to the heat exchanger 39 and/or heat exchanger 41.

In use and with reference to Figure 2, the control unit 32 controls the electric power transmission assembly 16 in order to distribute the electric power delivered by the energy storage unit 15 among the electric motors 13, 14 and 23 as a function of the operating regime of the crawler vehicle 1.

In particular, the inverters 17, 18 and 23 detect the first, second and third torque signals indicative of the torques generated by the electric motors 13, 14 and 23, respectively, and transmit said signals to the control unit 32.

The control unit 32 receives control commands issued by an operator of the crawler vehicle 1, receives the first, second and third torque signals, calculates the current required by the electric motors 13, 14 and 23, respectively, as a function of the first, second and third torque signals received and sets the first, second and third current limits as a function of the currents required by the electric motors 13, 14 and 23 and so that the sum of the powers transmitted to the electric motors 13, 14 and 23 is less than the total power that can be delivered by the energy storage unit 15 and so that the dynamics of the crawler vehicle 1 adhere to the control commands issued by the operator of the crawler vehicle 1.

Once said current limits have been set, the control unit 32 controls the electric power transmission assembly 16 so that the current of the electric power transmitted to the electric motors 13, 14 and 23 does not exceed the first, second and third current limits, respectively. In particular, the control unit 32 controls the inverters 17, 18, and 24 so that the current of the electric power transmitted to the electric motors 13, 14 and 23 does not exceed the first, second and third current limits, respectively.

By way of example, when the operator gives a right turn command to the crawler vehicle 1 via the user interface 8, the power required by the drive wheel 6 is greater than the power required by the drive wheel 5. In this case, the inverters 17 and 18 send the first and second torque signals, respectively, to the control unit 32, which calculates the current required by the electric motors 13 and 14 as a function of said power signals received and sets the first and second current limits as a function of the calculated required currents 23 and so that the sum of the powers transmitted to the electric motors 13 and 14 is less than the total power that can be delivered by the energy storage unit 15.

Since the power required by the electric motor 14 is greater than the power required by the electric motor 13, the first current limit set by the control unit 32 is less than the second current limit.

It is understood that variations may be made to the present invention without however departing from the scope of protection of the appended claims.

## Claims

1. A crawler vehicle, preferably for preparing ski runs, the crawler vehicle (1) comprising:
- a first track (3) and a second track (4);
- a first drive wheel (5) and a second drive wheel (6) independent of each other and coupled to the first and to the second track (3, 4) respectively;
- a first electric motor (13) and a second electric motor (14) mechanically coupled to the first and to the second drive wheel (5, 6) respectively;
- an electric energy storage unit (15) configured to deliver electric power; and
- an electric power transmission assembly (16), which is configured to transmit electric power, preferably exclusively, from the energy storage unit (15) to the first and to the second electric motor (13, 14) and comprises a first inverter (17) electrically coupled to the first electric motor (13), and a second inverter (18) electrically coupled to the second electric motor (14).

2. The crawler vehicle as claimed in claim 1, wherein the first and the second electric motor (13, 14) are arranged at the first and at the second drive wheel (5, 6), respectively.

3. The crawler vehicle as claimed in claim 1 or 2, wherein the first and the second drive wheel (5, 6) are configured to rotate around a first rotation axis (A2) and around a second rotation axis (A3), respectively; the first and the second electric motor (13, 14) being aligned with the first and the second rotation axis (A2, A3), respectively.

4. The crawler vehicle as claimed in any one of the foregoing claims, and comprising a first mechanical transmission (19) and a second mechanical transmission (20) configured to transmit mechanical power from the first electric motor (13) to the first drive wheel (5) and from the second electric motor (14) to the second drive wheel (6), respectively.

5. The crawler vehicle as claimed in any one of the foregoing claims, and comprising a working tool assembly (9), and a third electric motor (23; 30; 34) for driving the working tool assembly (9); the electric power transmission assembly (16) being configured to transmit electric power from the energy storage unit (15) to the third electric motor (23; 30; 34) and comprising a third inverter (24; 31; 35) electrically coupled to the third electric motor (23; 30; 34).

6. The crawler vehicle as claimed in claim 5, and comprising a hydraulic transmission assembly (42), preferably provided with a hydraulic pump (25), configured to transmit power from the third electric motor (23) to the working tool assembly (9).

7. The crawler vehicle as claimed in any one of the foregoing claims, wherein the crawler vehicle (1) is without an internal combustion engine.

8. The crawler vehicle as claimed in any one of the foregoing claims, and comprising a control unit (32) configured to receive control commands issued by an operator of the crawler vehicle (1) and to control the distribution of the electric power transmitted by the electric power transmission assembly (16) to the first and to the second electric motor (13, 14) so that the sum of the powers transmitted to the first and to the second electric motor (13, 14) is less than the total power that can be delivered by the energy storage unit (15) and that the dynamics of the crawler vehicle (1) adhere to the control commands issued by the operator of the crawler vehicle (1).

9. The crawler vehicle as claimed in claim 8, wherein the control unit (32) is configured to establish in real time a power priority between the first and the second electric motor (13, 14).

10. The crawler vehicle as claimed in claim 8 or 9, wherein the control unit (32) is configured to set a first and a second input current limit respectively to the first and to the second electric motor (13, 14) as a function of the operating regime of the crawler vehicle (1), and to control the electric power transmission assembly (16) so that the current of the electric power transmitted to the first and to the second electric motor (13, 14) does not exceed the first and the second current limit respectively.

11. The crawler vehicle as claimed in claim 10, wherein the control unit (32) is configured to control the first and the second inverter (17, 18) so that the current of the electric power transmitted to the first and to the second electric motor (13, 14) does not exceed the first and the second current limit respectively.

12. The crawler vehicle as claimed in claim 10 or 11, wherein the first and the second inverter (17, 18) are configured to respectively detect a first torque signal indicative of a first drive torque delivered by the first electric motor (13) and a second torque signal indicative of a second drive torque delivered by the second electric motor (14); the control unit (32) being in communication with the first and the second inverter (17, 18) and being configured to set said current limit as a function of the first and the second torque signal detected by the first and the second inverter respectively (17, 18).

13. The crawler vehicle as claimed in any one of the foregoing claims, and comprising a frame (2); a drive cabin (7) mounted on the frame (2); and a heat transfer assembly (37), which comprises at least one heating element (38) arranged within the drive cabin (7), at least one first heat exchanger (39) configured to exchange heat with the first and the second electric motor (13, 14) and/or with the first and the second inverter (17, 18) so as to heat a heating fluid, and a first transport system (40) for conveying the heating fluid from the first heat exchanger (39) to the heating element (38).

14. The crawler vehicle as claimed in claims 6 and 13, wherein the heat transfer assembly (37) comprises at least a second heat exchanger (41) configured to exchange heat with the hydraulic transmission assembly (42) so as to heat a heating fluid, and a second transport system (43) for conveying the heating fluid from the second heat exchanger (41) to the heating element (38).

15. A control method to control a crawler vehicle as claimed in any one of the foregoing claims, the control method comprising the steps of:
- issuing control commands to the crawler vehicle (1); and
- controlling the distribution of the electric power transmitted by the electric power transmission assembly (16) to the first and to the second electric motor (13, 14) so that the sum of the powers transmitted to the first and to the second electric motor (13, 14) is less than the total power that can be delivered by the energy storage unit (15), and so that the dynamics of the crawler vehicle (1) adhere to the control commands issued to the crawler vehicle (1).

16. The control method as claimed in claim 15, and comprising the step of establishing in real time a power priority between the first and the second electric motor (13, 14).

17. The control method as claimed in claim 15 or 16, and comprising the steps of setting an input current limit to the first and to the second electric motor (13, 14) as a function of the operating regime of the crawler vehicle (1); and controlling the electric power transmission assembly (16) so that the current of the electric power transmitted to the first and to the second electric motor (13, 14) does not exceed the respective current limit.

18. The control method as claimed in claim 17, and comprising the steps of detecting a first torque signal indicative of a first drive torque delivered by the first electric motor (13) and a second torque signal indicative of a second drive torque delivered by the second electric motor (14); and setting said current limit as a function of the first and second torque signals detected.

19. A computer program configured to control a crawler vehicle and directly loadable into a memory of a computer to carry out the method steps of any one of claims 15 to 18 when the program is implemented by the computer.

20. A program product comprising a readable medium on which the program of claim 19 is stored.
